# DEMANDE DE BREVET EUROPEEN

(11) **EP 4 495 863 A1**
(43) Date de publication de la demande: **22.01.2025**
(21) Numéro de dépôt: 24184049.5
(22) Date de dépôt: 24.06.2024
(51) Int. Cl.: G06Q 30/0241

(54) **PREDICTION DE LA CONSOMMATION ELECTRIQUE INDUITE PAR L'AFFICHAGE D'UNE IMAGE PAR UN DISPOSITIF D'AFFICHAGE NUMERIQUE**

(30) Priorité: 17.07.2023 FR 2307639
(71) Demandeur: JCDecaux SE, 92200 Neuilly-Sur-Seine (FR)
(72) Inventeur: CHANSON, Frédéric, 78955 CARRIERES-SOUS-POISSY (FR); SIMON, Arnaud, 78280 GUYANCOURT (FR)
(74) Mandataire: Plasseraud IP

(57) **Abrégé**

Procédé d'entraînement d'un moteur d'apprentissage automatique supervisé pour la prédiction de la consommation électrique induite par l'affichage d'au moins une image par un dispositif d'affichage numérique, ledit procédé comprenant : l'obtention d'une base d'entraînement à partir d'une pluralité d'images d'entraînement, chaque échantillon de ladite base d'entraînement comprenant : au moins une caractéristique appartenant à un groupe de caractéristiques comprenant : des caractéristiques d'un dispositif d'affichage numérique ; des caractéristiques de l'environnement du dispositif d'affichage numérique ; des caractéristiques d'une image d'entraînement ; une valeur mesurée de consommation induite par l'affichage de ladite image d'entraînement, ladite valeur de consommation induite étant mesurée sur le dispositif d'affichage numérique lors de l'affichage de l'image d'entraînement ; l'entraînement dudit moteur d'apprentissage automatique supervisé sur ladite base d'entrainement pour minimiser une fonction de perte entre les prédictions de consommation électriques induites effectuées par le moteur d'apprentissage automatique supervisé et les valeurs mesurées de consommations induites

## Description

### Domaine technique

La présente divulgation relève du domaine de l'affichage d'images numériques. Plus spécifiquement, elle relève du domaine de l'estimation de la consommation électrique induite par l'affichage d'images numériques.

### Technique antérieure

Les dispositifs d'affichage numériques sont des dispositifs permettant de diffuser des contenus numériques. Les contenus numériques peuvent par exemple comprendre des publicités, mais aussi des campagnes d'information ou de sensibilisation.

Les dispositifs d'affichage numérique peuvent par exemple se présenter sous la forme de grands écrans disposés dans l'espace public, par exemple dans des stations de métro, sur des devantures d'immeubles ou intégrés dans des abris pour voyageurs, dans des vitrines de magasin ou dans des aéroports. Les dispositifs d'affichage numérique peuvent également se présenter sous la forme de dispositifs posés au sol.

L'affichage d'images, ou plus généralement de contenu par les dispositifs d'affichage numérique induit une consommation électrique, notamment de la part des écrans affichant les images. Avec le déploiement de nombreux dispositifs d'affichage numérique dans l'environnement urbain, la consommation électrique totale pour l'affichage des campagnes publicitaires peut devenir importante. Il est donc souhaitable d'évaluer et de réduire la consommation électrique induite par l'affichage de contenus numériques sur un ensemble de dispositifs d'affichage numériques.

Cependant, la quantité d'énergie électrique consommée par les dispositifs d'affichage numériques pour l'affichage d'une image ou d'un contenu donné peut s'avérer difficile à évaluer a priori. En effet, elle peut varier selon le contenu lui-même, le dispositif d'affichage numérique sur lequel le contenu est diffusé, ou encore l'environnement du dispositif d'affichage numérique.

Ainsi, l'état de l'art ne permet pas d'évaluer, et donc de réduire, la consommation électrique induite par la diffusion de contenu sur des écrans numériques.

Il y a donc besoin d'une méthode permettant d'évaluer la consommation électrique induite par la diffusion de contenu sur des écrans numériques.

### Résumé

La présente divulgation vient améliorer la situation.

Il est proposé un procédé d'entraînement d'un moteur d'apprentissage automatique supervisé pour la prédiction de la consommation électrique induite par l'affichage d'au moins une image par un dispositif d'affichage numérique, ledit procédé comprenant : l'obtention d'une base d'entraînement à partir d'une pluralité d'images d'entraînement, chaque échantillon de ladite base d'entraînement comprenant : au moins une caractéristique appartenant à un groupe de caractéristiques comprenant : des caractéristiques d'un dispositif d'affichage numérique ; des caractéristiques de l'environnement du dispositif d'affichage numérique ; des caractéristiques d'une image d'entraînement ; une valeur de consommation induite par l'affichage de ladite image d'entraînement, ladite valeur de consommation électrique induite étant obtenue grâce à une mesure effectuée lors de l'affichage de l'image d'entraînement ;l'entraînement dudit moteur d'apprentissage automatique supervisé sur ladite base d'entrainement pour minimiser une fonction de perte entre les prédictions de consommation électriques induites effectuées par le moteur d'apprentissage automatique supervisé et les valeurs de consommations induites obtenues grâce aux mesures effectuées lors de l'affichage des images

On entend par « consommation électrique induite par l'affichage d'au moins une image par un dispositif d'affichage numérique » la consommation électrique du dispositif d'affichage numérique qui est entraînée par l'affichage de l'image. Il peut s'agir de la consommation électrique du dispositif d'affichage numérique lors de l'affichage de l'image, ou de la consommation électrique additionnelle du dispositif d'affichage numérique lors de l'affichage de l'image, par rapport à une consommation électrique de base du dispositif. La consommation électrique peut être exprimée de différentes manières. Par exemple, elle peut être exprimée sous la forme d'une puissance électrique (par exemple en W) consommée lors de l'affichage de l'image, ou d'une énergie électrique (par exemple en joules) consommée pour l'affichage de l'image.

On entend par « images d'entraînement » des images utilisées, directement ou indirectement, pour l'entrainement du moteur d'apprentissage automatique supervisé. Ces images peuvent être utilisées directement pour l'apprentissage, lorsque le moteur d'apprentissage automatique supervisé est entraîné pour prévoir les consommations électriques au moins à partir des images elles-mêmes, ou indirectement, lorsqu'elles sont utilisées pour mesurer les consommations électriques lors de la lecture des images d'entraînement, mais que le moteur d'apprentissage automatique supervisé est entraîné pour prévoir les consommation à partir de caractéristiques ne comprenant pas les images elles-mêmes.

On entend par « caractéristique » une caractéristique relative à une image, un dispositif d'affichage numérique ou à l'environnement d'un dispositif d'affichage numérique utilisée pour la prédiction de la consommation électrique induite par l'affichage de l'image.

On entend par « caractéristique d'un dispositif d'affichage numérique » une caractéristique du dispositif impactant l'énergie consommée lors de l'affichage d'une image. Une telle caractéristique peut par exemple consister en :
- un fabriquant du dispositif ;
- un modèle du dispositif ;
- un type d'écran du dispositif (LCD, LED...) ;
- une luminosité de l'écran ;
- un type de traitement d'image utilisé pour l'affichage de l'image, par exemple un type d'algorithme de gradation locale ;
- l'ancienneté du dispositif ;
- etc.

On entend par « caractéristiques de l'environnement du dispositif d'affichage numérique » des caractéristiques physiques de l'environnement immédiat du dispositif d'affichage numérique. Une caractéristique de l'environnement du dispositif d'affichage numérique peut par exemple consister en :
- une position du dispositif d'affichage numérique ;
- une orientation du dispositif d'affichage numérique ;
- une donnée météorologique, par exemple une valeur de température, d'humidité ou de luminosité ambiante ;
- une valeur de luminosité ambiante ;
- etc.

On entend par « caractéristique d'une image » au moins une donnée caractérisant l'image. Une telle caractéristique peut consister en :
- des valeurs numériques d'intensité de pixels de l'image, par exemple :
   ∘ l'image elle-même ;
   ∘ des intensités lumineuses de pixels sur une couche représentative de l'image (par exemple une couche de luminance) ;
   ∘ une image redimensionnée ;
   ∘ etc.
- des caractéristiques globales de l'image, par exemple :
   ∘ la résolution de l'image ;
   ∘ la luminosité moyenne de l'image ;
   ∘ un niveau de contraste de l'image ;
   ∘ etc.
- etc.

On entend par « valeur mesurée de consommation induite » une valeur de consommation induite résultant d'une mesure de consommation électrique lors de l'affichage d'une image. Cette valeur peut être la valeur mesurée elle-même (par exemple lorsque la consommation induite est la consommation électrique du dispositif d'affichage numérique lors de l'affichage de l'image), ou une valeur obtenue à partir de la valeur mesurée (par exemple lorsque la consommation induite est une consommation électrique additionnelle du dispositif d'affichage numérique lors de l'affichage de l'image, par rapport à une consommation électrique de base du dispositif).

On entend par « moteur d'apprentissage automatique supervisé » une fonction de prédiction associée à des paramètres permettant :
- lors d'une phase dite d'apprentissage, d'adapter les valeurs de paramètres afin de prédire de manière aussi exacte que possible les valeurs d'échantillons annotés d'une base d'apprentissage ;
- lors d'une phase dite d'inférence, de prédire des valeurs du même type à partir d'échantillons non annotés.

Selon l'invention différents types de moteurs d'apprentissage supervisé peuvent être mise en oeuvre, comme par exemple :
- un ou plusieurs réseaux de neurones artificiels (en anglais « artificial neural network ») ;
- des machines à vecteurs de support (en anglais « support vector machine » ;
- des forêts d'arbre décisionnels (ou forêts aléatoires, de l'anglais « random forest ») ;
- etc.

Ainsi, le moteur d'apprentissage automatique supervisé peut être entraîné, afin de pouvoir effectuer des prédictions précises de la consommation électrique induite par une image donnée sur un dispositif d'affichage numérique donné. Ceci permet ainsi de limiter la consommation d'électricité induite par l'affichage d'images sur des dispositifs d'affichage numériques.

Selon un autre aspect, il est proposé un procédé de prédiction de la consommation électrique induite par l'affichage d'au moins une image par un dispositif d'affichage numérique, ledit procédé comprenant : l'obtention d'au moins une caractéristique appartenant à un groupe de caractéristiques comprenant : des caractéristiques du dispositif d'affichage numérique ; des caractéristiques de l'environnement du dispositif d'affichage numérique ; des caractéristiques de l'au moins une image à afficher ; l'exécution d'un moteur d'apprentissage automatique supervisé prenant en entrée ladite au moins une caractéristique, ledit moteur d'apprentissage automatique supervisé ayant été préalablement entraîné par un procédé selon l'un des modes de réalisation de l'invention.

Ceci permet de prédire, et donc in fine de réduire, la consommation électrique induite par l'affichage de l'image par le dispositif d'affichage numérique

Selon un autre aspect, il est proposé un système pour l'entraînement d'un moteur d'apprentissage automatique supervisé pour la prédiction de la consommation électrique induite par l'affichage d'au moins une image par un dispositif d'affichage numérique, ledit système comprenant : au moins un dispositif d'affichage numérique apte à mesurer une consommation électrique induite par l'affichage d'au moins une image ; au moins une unité de calcul configurée pour exécuter un procédé selon l'un des modes de réalisation de l'invention.

On entend par « unité de calcul » un composant électronique apte à effectuer des calculs informatiques pour effectuer une fonction déterminée. Une unité de calcul peut désigner tout type de processeur ou composant électronique apte à effectuer des calculs numériques. Par exemple, une unité de calcul peut être un circuit intégré, un ASIC (de l'acronyme anglais « Application-Specific Integrated Circuit », littéralement en français « circuit intégré propre à une application », un microcontrôleur, un microprocesseur, un DSP (de l'acronyme anglais « Digital Signal Processor », littéralement en français « processeur de signal numérique »), un processeur, un GPU (de l'acronyme anglais « Graphics Processing Unit », littéralement en français « unité de calcul graphique »). Une unité de calcul selon l'invention n'est pas limitée à un type particulier d'architecture de calcul. Par exemple, un processeur peut mettre en oeuvre une architecture de type Harvard ou Von Neumann.

On entend par « mémoire » un élément électronique numérique servant à stocker des données. Différents types de mémoires peuvent être utilisés dans l'invention, telles qu'une mémoire morte, une mémoire vive, une mémoire volatile ou une mémoire flash. Un dispositif selon l'invention peut être équipé d'une ou plusieurs mémoires non volatiles pouvant être de différents types tels que des mémoires de masse, mémoire flash, mémoires mortes ou mémoires SSD. Un dispositif selon l'invention peut également comprendre une ou plusieurs mémoires vives telles que des mémoires RAM, DRAM, SRAM, DPRREAM, VRAM, eDRAM ou 1T-SRAM.

Selon un autre aspect, il est proposé un système pour l'affichage d'au moins une image, ledit système comprenant : au moins un dispositif d'affichage numérique ; au moins une unité de calcul configurée pour exécuter un procédé selon l'un des modes de réalisation de l'invention.

Selon un autre aspect, il est proposé un dispositif d'affichage numérique déployé selon l'un des modes de réalisation de l'invention.

Selon un autre aspect, il est proposé un moteur d'apprentissage automatique supervisé pour la prédiction de la consommation électrique induite par l'affichage d'au moins une image par un dispositif d'affichage numérique entraîné par un procédé selon l'un des modes de réalisation de l'invention.

Selon un autre aspect, il est proposé un programme informatique comportant des instructions pour la mise en oeuvre de tout ou partie d'un procédé tel que défini dans les présentes lorsque ce programme est exécuté par un processeur.

Selon un autre aspect, il est proposé un support d'enregistrement non transitoire, lisible par un ordinateur, sur lequel est enregistré un tel programme.

Les caractéristiques exposées dans les paragraphes suivants peuvent, optionnellement, être mises en oeuvre, indépendamment les unes des autres ou en combinaison les unes avec les autres :

Avantageusement, l'au moins une caractéristique comprend l'image d'entraînement.

Ceci permet d'entraîner le moteur d'apprentissage automatique à prédire la consommation électrique induite par l'affichage de chaque image. Un moteur d'apprentissage automatique, notamment un réseau de neurones, sera alors particulièrement apte à détecter les éléments d'une image (contraste, transitions...) influant la consommation électrique induite.

Avantageusement, l'au moins une caractéristique comprend en outre au moins une caractéristique du dispositif d'affichage numérique sur lequel l'image est affichée.

Ceci permet d'apprendre automatiquement les corrélations entre certaines caractéristiques des images, certaines caractéristiques des écrans, et la consommation induite par l'affichage des images sur les écrans. Ceci permet donc d'améliorer l'affectation de différentes images sur différents écrans, afin de diminuer la consommation électrique induite par l'affichage des images.

Avantageusement, l'au moins une caractéristique comprend une valeur de luminosité d'un écran du d'affichage numérique sur lequel l'image est affichée au moment de l'affichage de l'image.

Ceci permet de prédire la consommation électrique induite par l'affichage de l'image en fonction de la luminosité de l'écran sur lequel l'image est affichée lors de l'affichage de l'image.

Avantageusement, l'au moins une caractéristique comprend au moins une caractéristique de l'environnement du dispositif d'affichage numérique.

Ceci permet de prédire la consommation induite par l'affichage d'une image en fonction de la disposition du dispositif dans son environnement.

Avantageusement, l'au moins une caractéristique de l'environnement du dispositif d'affichage numérique comprend au moins une donnée météorologique.

Ceci permet de prédire la consommation induite par l'affichage d'une image en fonction des caractéristiques météorologiques observées ou prédites à un instant donné.

Avantageusement, l'au moins une caractéristique comprend au moins une caractéristique du dispositif d'affichage numérique ou de l'environnement du dispositif ; le procédé comprend une modification de ladite au moins une caractéristique du dispositif d'affichage numérique ou de l'environnement du dispositif pour réduire la prédiction de la consommation électrique induite par l'affichage de l'au moins une image.

Ceci permet de modifier un dispositif d'affichage numérique ou son environnement afin de réduire la consommation d'électricité induite par l'affichage d'images sur le dispositif d'affichage numérique.

Avantageusement, le procédé comprend en outre le déploiement du dispositif selon ladite au moins une caractéristique modifiée.

On entend par « déploiement du dispositif d'affichage numérique » l'implantation d'un dispositif dans un environnement selon des caractéristiques données. Par exemple, les caractéristiques peuvent être des caractéristiques du dispositif lui-même (taille, type d'écran)...) ou des caractéristiques de son environnement (position, orientation...).

Ceci permet de déployer le dispositif d'affichage numérique selon les caractéristiques modifiées, afin que l'affichage d'images sur le dispositif tel que déployé s'effectue avec une consommation électrique réduite.

Avantageusement, l'au moins une caractéristique comprend au moins une caractéristique de l'au moins image à afficher ; le procédé comprend en outre la modification de ladite au moins une caractéristique de l'au moins image à afficher pour réduire la prédiction de la consommation électrique induite par l'affichage de l'au moins une image.

Ceci permet de modifier au moins une image, de manière à réduire la consommation électrique induite par l'affichage de l'image.

Avantageusement, le procédé comprend en outre l'affichage de l'au moins une image modifiée sur un dispositif d'affichage numérique.

Par « l'affichage de l'au moins une image modifiée sur un dispositif d'affichage numérique », on entend une action entraînant l'affichage de l'au moins une image sur un dispositif d'affichage numérique. Par exemple, il peut s'agir de l'affichage physique de l'image proprement dit, ou bien de l'envoi au dispositif d'une instructions d'affichage, par exemple l'envoi de l'au moins une image elle-même accompagnée d'une instruction d'affichage.

Ceci permet d'afficher une image modifiée, de manière à réduire la consommation électrique induite par l'affichage de l'image.

Avantageusement, le procédé comprend : la prédiction de la consommation électrique induite par l'affichage d'une pluralité de contenus comprenant au moins une image par au moins un dispositif d'affichage numérique ; la sélection d'au moins un contenu à afficher parmi ladite pluralité de contenus, afin de minimiser la prédiction de la consommation électrique induite par l'affichage de l'au moins un contenu.

Ceci permet de sélectionner un contenu parmi plusieurs contenus possibles, qui minimisent la consommation induite par son affichage.

Avantageusement, le procédé comprend en outre l'affichage de l'au moins un contenu sélectionné sur l'au moins un dispositif d'affichage numérique.

Ceci permet de d'afficher un contenu sélectionné afin que son affichage induise une consommation électrique réduite.

### Brève description des dessins

D'autres caractéristiques, détails et avantages apparaîtront à la lecture de la description détaillée ci-après, et à l'analyse des dessins annexés, sur lesquels :
**Fig. 1**

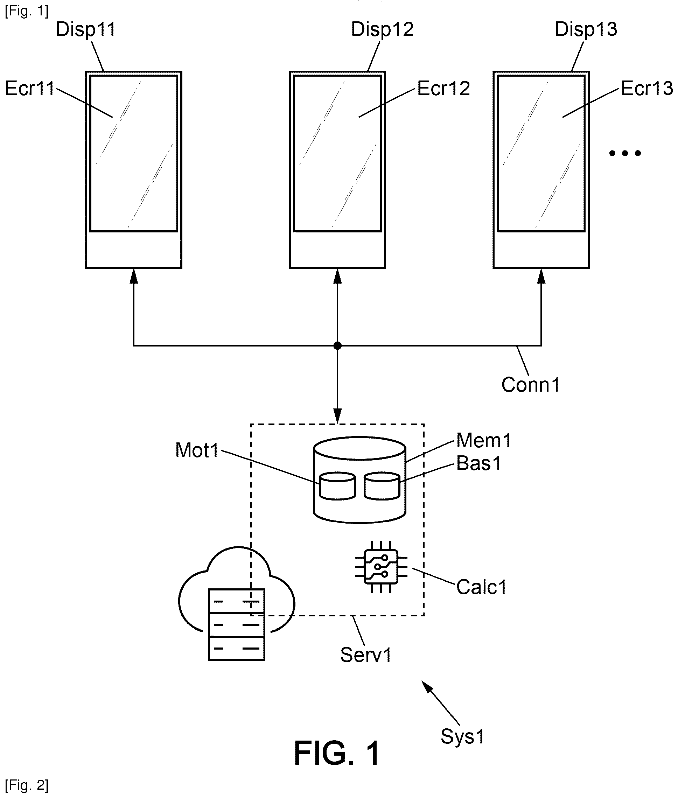

   [Fig. 1] montre un système pour l'entraînement d'un moteur d'apprentissage automatique supervisé pour la prédiction de la consommation électrique induite par l'affichage d'au moins une image par un dispositif d'affichage numérique selon un ensemble de modes de réalisation de l'invention.
**Fig. 2**

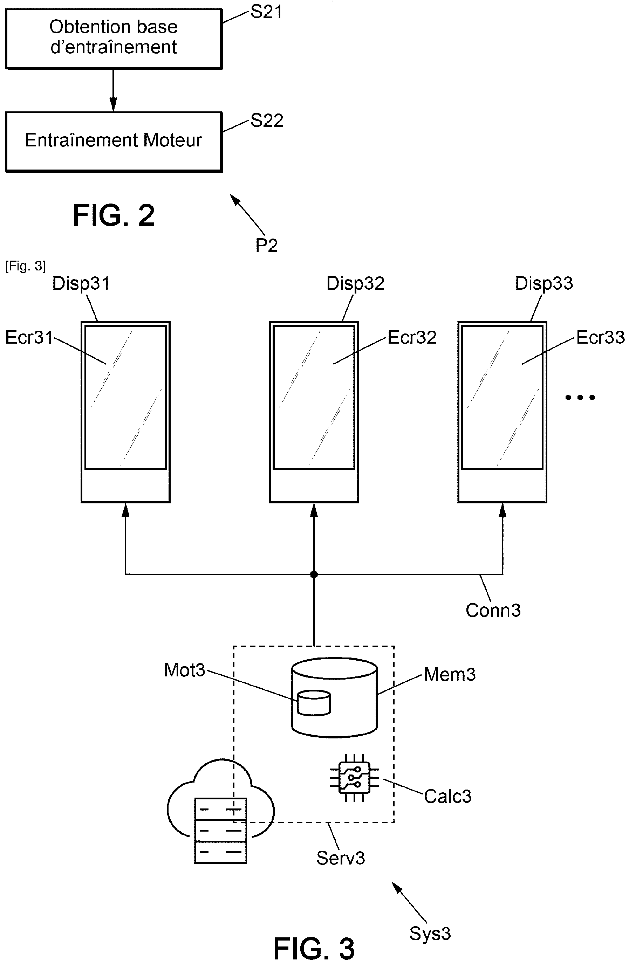

   [Fig. 2] montre un procédé d'entraînement d'un moteur d'apprentissage automatique supervisé pour la prédiction de la consommation électrique induite par l'affichage d'au moins une image par un dispositif d'affichage numérique selon un mode de réalisation.
**Fig. 3**
   [Fig. 3] montre un système pour l'affichage d'au moins une image par au moins un dispositif d'affichage numérique selon un ensemble de modes de réalisation de l'invention.
**Fig. 4**

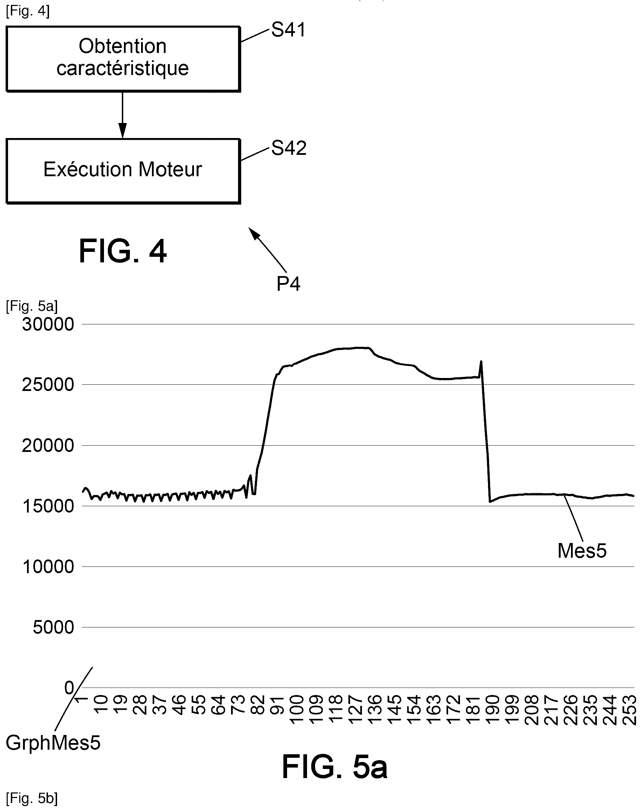

   [Fig. 4] montre un procédé de prédiction de la consommation électrique induite par l'affichage d'au moins une image par un dispositif d'affichage numérique selon un mode de réalisation.
**Fig. 5a**
   [Fig. 5a] montre un exemple de consommation électrique induite par l'affichage des images d'un premier contenu, telle que mesurée, selon un mode de réalisation.
**Fig. 5b**

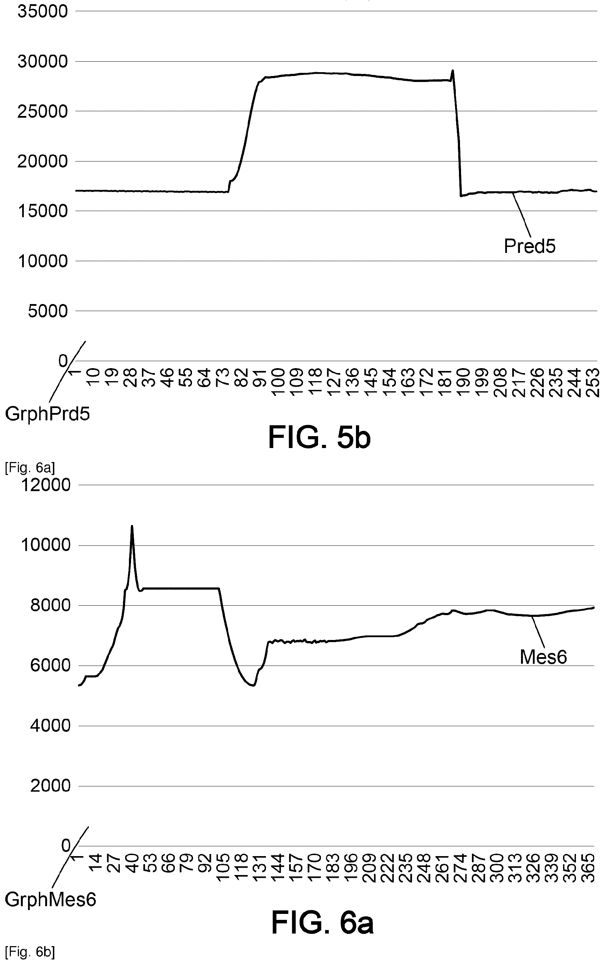

   [Fig. 5b] montre un exemple de consommation électrique induite par l'affichage des images d'un premier contenu, telle que prédite, selon un mode de réalisation.
**Fig. 6a**
   [Fig. 6a] montre un exemple de consommation électrique induite par l'affichage des images d'un deuxième contenu, telle que mesurée, selon un mode de réalisation.
**Fig. 6b**

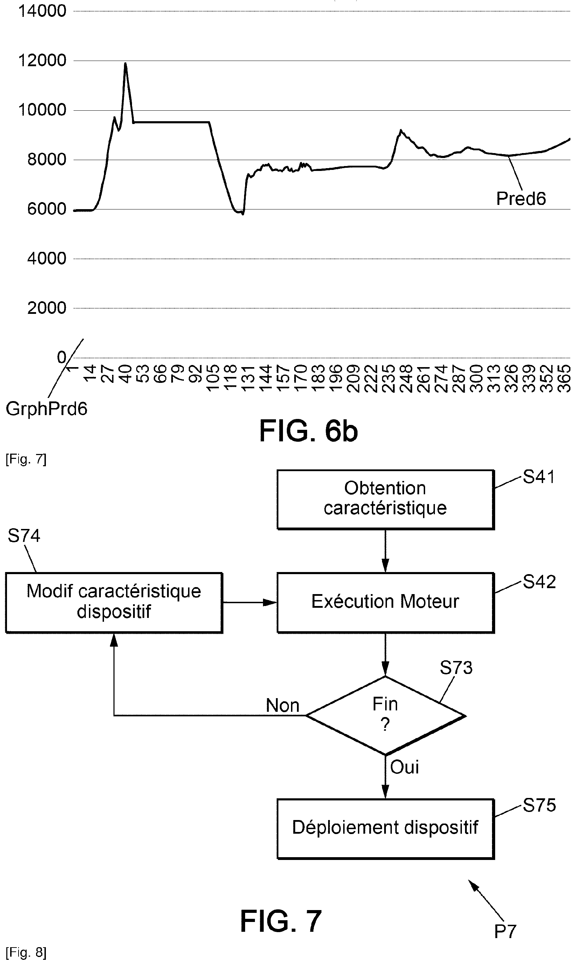

   [Fig. 6b] montre un exemple de consommation électrique induite par l'affichage des images d'un deuxième contenu, telle que prédite, selon un mode de réalisation.
**Fig. 7**
   [Fig. 7] montre un exemple de procédé de prédiction de la consommation électrique induite par l'affichage d'images sur un dispositif d'affichage numérique d'un dispositif en fonction d'au moins une caractéristique du dispositif ou de son environnement selon un mode de réalisation.
**Fig. 8**

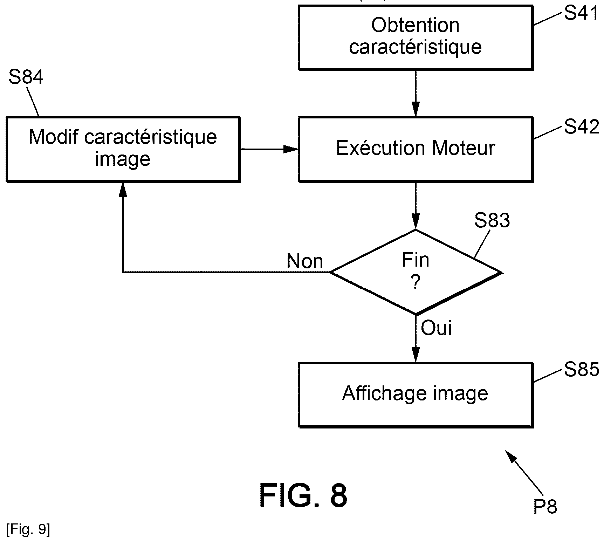

   [Fig. 8] montre un exemple de procédé modification d'au moins une caractéristique d'au moins une image pour réduire la consommation électrique induite par l'affichage de l'au moins une image, selon un ensemble de modes de réalisation de l'invention.
**Fig. 9**

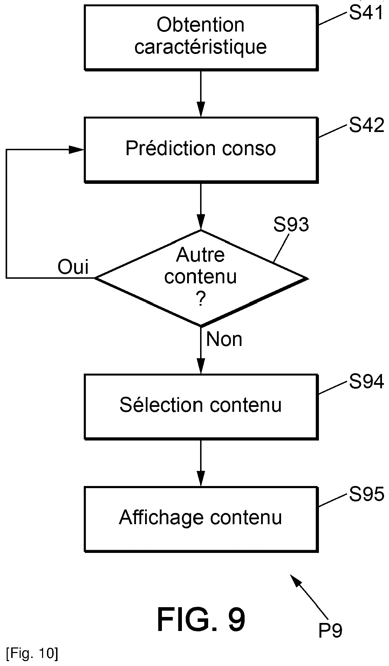

   [Fig. 9] montre un exemple d'un procédé de sélection d'un contenu à afficher selon un mode de réalisation.
**Fig. 10**

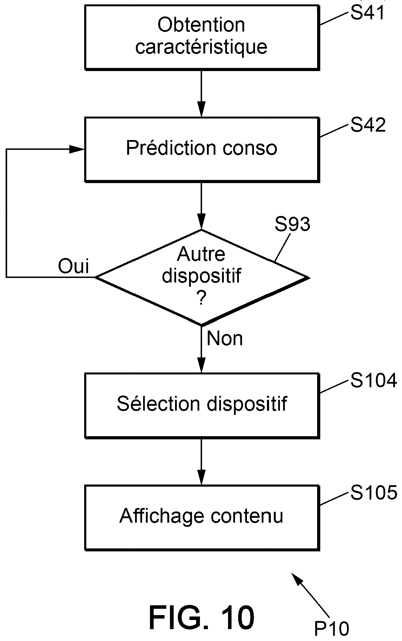

   [Fig. 10] montre un exemple d'un procédé de sélection d'un dispositif sur lequel afficher un contenu selon un mode de réalisation

### Description des modes de réalisation

Il est maintenant fait référence à la figure 1.

La figure 1 montre un système Sys1 pour l'entraînement d'un moteur d'apprentissage automatique supervisé pour la prédiction de la consommation électrique induite par l'affichage d'au moins une image par un dispositif d'affichage numérique selon un ensemble de modes de réalisation de l'invention.

Le système Sys1 comprend au moins un dispositif d'affichage numérique apte à mesurer une consommation électrique induite par l'affichage d'au moins une image lors de l'affichage de l'image.

Dans l'exemple de la figure 1, le système Sys1 comprend trois dispositifs d'affichage numérique Disp11, Disp12 et Disp13, équipés chacun respectivement d'un écran Ecr11, Ecr12, Ecr 13. Cet exemple est fourni à titre d'exemple non limitatif uniquement, et un nombre variable de dispositifs d'affichage numérique peut être mis en oeuvre. Les dispositifs peuvent être de même type ou de types différents (par exemple, peuvent correspondre à un unique modèle de dispositif d'affichage numérique, ou à différents modèles).

Les dispositifs d'affichage numérique Disp11, Disp12 et Disp13 sont aptes à afficher au moins une image, ou plus généralement diffuser du contenu comprenant une ou plusieurs images, et à mesurer la consommation électrique durant l'affichage de l'image. Ceci permet ainsi de déterminer, pour une image et un dispositif numérique donnés, une valeur de consommation électrique induite par l'affichage de l'image sur le dispositif d'affichage numérique.

Dans l'exemple de la figure 1, les dispositifs d'affichage numérique sont des dispositifs fixes destinés à diffuser du contenu publicitaire. L'invention n'est cependant pas limitée à cet exemple. Par exemple, les dispositifs d'affichage numérique peuvent être tout type de dispositifs numériques aptes à afficher des images. Par exemple, il peut s'agir de dispositifs portables tels que des smartphones ou tablettes.

Le système Sys1 comprend de plus au moins un dispositif de calcul, par exemple au moins un serveur Servi. Dans l'exemple de la figure 1, un unique serveur Servi est représenté. Cependant, cet exemple est fourni à titre d'exemple non limitatif uniquement, et l'invention n'est pas restreinte à un type particulier de dispositif de calcul. Selon différents modes de réalisation de l'invention, les unités de calcul et mémoire peuvent être répartis sur un unique dispositif de calcul, ou sur plusieurs dispositifs de calcul, par exemple plusieurs serveurs. Les dispositifs de calcul peuvent également être de différents types. Par exemple, l'entraînement peut s'effectuer sur un ordinateur personnel plutôt que sur un serveur.

L'au moins un dispositif de calcul, par exemple le serveur Servi, peut être en communication avec les dispositifs d'affichage numériques par une connexion Conn1. La connexion Conn1 peut comprendre tout type de lien permettant d'échanger des données entre l'au moins un dispositif de calcul et les dispositifs d'affichage numériques. Par exemple, la connexion Conn1 peut comprend une connexion de type filaire (fibre optique, ADSL...) ou sans fil (Wi-Fi, 4G, 5G...) permettant ainsi à l'au moins un dispositif de calcul d'envoyer des images à afficher à chacun des dispositifs d'affichage numérique, et de recevoir une valeur de consommation électrique pendant l'affichage de chaque image. Si la valeur de consommation induite par l'affichage de ladite image d'entraînement n'est pas la valeur brute de consommation du dispositif d'affichage pendant l'affichage de l'image, le calcul de la valeur de consommation induite peut se faire, soit par le dispositif d'affichage lui-même, soit par l'au moins un dispositif de calcul, à partir de la valeur de consommation brute d'électricité.

Le système Sys1 comprend au moins une mémoire pouvant stocker :
- un moteur d'apprentissage automatique supervisé Mot1 ;
- une base d'entraînement Bas1.

Comme indiqué ci-dessus, un moteur d'apprentissage automatique supervisé est une fonction, ou modèle, de prédiction associée à des paramètres. Par exemple, le moteur d'apprentissage supervisé peut comprendre un réseau de neurones artificiel associé à des paramètres tels que les poids des connexions entre les neurones ou des seuils d'activation de fonctions sigmoïdes. Le stockage du moteur d'apprentissage automatique supervisé Mot1 correspond donc au stockage de la fonction de prédiction et des paramètres.

La base d'entraînement Bas1 comprend l'ensemble des données permettant d'entraîner le modèle. La base d'entraînement comprend ainsi un ensemble d'échantillons d'entraînement, chaque échantillon correspondant à l'affichage d'une image d'entraînement donnée sur un dispositif d'affichage numérique donnée. Chaque échantillon comprend ainsi :
- au moins une caractéristique appartenant à un groupe de caractéristiques comprenant :
   ∘ des caractéristiques d'un dispositif d'affichage numérique ;
   ∘ des caractéristiques de l'environnement du dispositif d'affichage numérique ;
   ∘ des caractéristiques de l'image d'entraînement ;
- une valeur mesurée de consommation induite par l'affichage de ladite image d'entraînement, ladite valeur de consommation électrique induite obtenue, directement ou indirectement, par une mesure effectuée sur le dispositif d'affichage numérique lors de l'affichage de l'image d'entraînement.

L'au moins un dispositif de calcul comprend également au moins une unité de calcul Calc1 configurée pour entraîner le moteur d'apprentissage automatique supervisé, par exemple en mettant en oeuvre un procédé selon l'un des modes de réalisation décrits en figure 2.

La figure 2 montre un procédé d'entraînement d'un moteur d'apprentissage automatique supervisé pour la prédiction de la consommation électrique induite par l'affichage d'au moins une image par un dispositif d'affichage numérique selon un mode de réalisation.

Le procédé P2 peut par exemple être mis en oeuvre par une unité de calcul telle que l'unité de calcul Calc1.

Le procédé P2 comprend une première étape S21 d'obtention d'une base d'entraînement à partir d'une pluralité d'images d'entraînement. Comme indiqué ci-dessus, chaque échantillon de la base d'entraînement est associé à une image d'entraînement et un dispositif d'affichage numérique, et comprend :
- au moins une caractéristique ;
- une valeur de consommation induite par l'affichage de l'image sur le dispositif d'affichage obtenue grâce à une mesure effectuée sur le dispositif d'affichage numérique lors de l'affichage de l'image d'entraînement.

L'obtention de la base d'entraînement peut donc se faire, par le chargement d'une base préconstituée, et/ou la création de tout ou partie de la base.

La création de la base peut se faire, pour chaque échantillon :
- d'une part, en extrayant l'au moins une caractéristique ;
- d'autre part, en affichant l'image d'entraînement sur le dispositif d'affichage numérique, et en mesurant la consommation durant l'affichage, afin d'obtenir, directement ou indirectement, la consommation électrique induite par l'affichage de l'image d'entraînement.

La consommation d'électricité induite peut, selon différents modes de réalisation, s'effectuer sur une ou plusieurs mesures de consommation électrique portant sur :
- la consommation électrique de l'ensemble du dispositif d'affichage ;
- la consommation électrique de l'écran ;
- la consommation électrique d'éléments du dispositif d'affichage autres que l'écran sollicités pour l'affichage de l'image : routeur, unités de calcul, lecteurs vidéo, ventilateurs...

Ainsi, la consommation induite peut correspondre selon différents modes de réalisation de l'invention, à la consommation de l'écran seul, ou à la consommation d'un ensemble d'éléments du dispositif d'affichage impliqués dans la lecture de l'image d'entraînement. La valeur de consommation électrique induite retenue peut être la valeur de consommation électrique brute mesure (ou la somme des valeurs mesurées sur plusieurs éléments sont pris en compte), ou une valeur déduite des valeurs mesurées. Par exemple, la consommation induite peut être obtenue en retranchant à la consommation totale mesurée du dispositif lors de l'affichage de l'image une valeur représentative d'une consommation électrique de base du dispositif d'affichage.

Le procédé P2 comprend ensuite une deuxième étape S22 d'entraînement du moteur d'apprentissage automatique supervisé sur ladite base d'entrainement pour minimiser une fonction de perte entre les prédictions de consommation électriques induites effectuées par le moteur d'apprentissage automatique supervisé et les valeurs de consommations induites obtenues grâce aux mesures effectuées lors de l'affichage des images.

En pratique, cette étape consiste à adapter les valeurs de paramètres du moteur d'apprentissage automatique supervisé, afin de minimiser une fonction de perte une fonction de perte représentant la différence entre les prédictions du moteur d'apprentissage et les consommations induites issues des mesures. Par exemple, si le moteur d'apprentissage automatique supervisé est un réseau de neurones artificiels, la deuxième étape S22 peut être réalisée par le biais d'une technique dite de rétropropagation du gradient.

Ainsi, le moteur d'apprentissage automatique supervisé peut être entraîné, afin de pouvoir effectuer des prédictions précises de la consommation électrique induite par une image donnée sur un dispositif d'affichage numérique donné. Ceci permet ainsi de limiter la consommation d'électricité induite par l'affichage d'images sur des dispositifs d'affichage numériques.

Selon différents modes de réalisation de l'invention, différentes caractéristiques, ou combinaison de caractéristiques, peuvent être prises en compte.

De manière générale, différentes caractéristiques peuvent être sélectionnées selon la prédiction souhaitées.

Par exemple, l'au moins une caractéristique peut comprendre l'image d'entraînement elle-même.

Ceci permet d'entraîner le moteur d'apprentissage automatique à prédire la consommation électrique induite par l'affichage de chaque image. Un moteur d'apprentissage automatique, notamment un réseau de neurones, sera alors particulièrement apte à détecter les éléments d'une image (contraste, transitions...) influant la consommation électrique induite.

L'au moins une caractéristique peut également comprendre, plutôt que l'image elle-même, une ou plusieurs caractéristiques représentatives de l'image (résolution, dimension, contraste, etc.) pouvant servir de prédicteurs de la consommation électrique induite par l'affichage de l'image.

Dans un ensemble de modes de réalisation de l'invention, l'au moins une caractéristique comprend en outre au moins une caractéristique du dispositif d'affichage numérique sur lequel l'image est affichée.

Dit autrement, les caractéristiques servant de bases à la prédiction comprennent dans ce cas l'image elle-même (ou une caractéristique distinctive de l'image), et au moins une caractéristique du dispositif d'affichage. Par exemple, certaines caractéristiques d'images peuvent être associées à une consommation plus élevée pour certains types d'écrans, certains fabricants, certaines valeurs de luminosité de l'écran, certains types d'algorithmes de gradation locale, etc...

Le moteur d'apprentissage automatique pourra ainsi faire le lien entre les caractéristiques des images et des écrans, afin de corréler certaines combinaisons de caractéristiques à une consommation induite plus ou moins élevée. Ceci permet donc d'améliorer l'affectation des différentes images à différents écrans, en fonction des caractéristiques des images et des écrans, afin d'optimiser l'affectation des images à afficher aux différents écrans pour diminuer la consommation électrique induite par l'affichage des images.

Ceci permet d'apprendre automatiquement les corrélations entre certaines caractéristiques des images, certaines caractéristiques des écrans, et la consommation induite par l'affichage des images sur les écrans. Ceci permet donc d'améliorer l'affectation de différentes images sur différents écrans, afin de diminuer la consommation électrique induite par l'affichage des images.

Les caractéristiques du dispositif d'affichage numérique sur lequel l'image est affichée peuvent comprendre, de manière non limitative, une ou plusieurs caractéristiques choisies parmi :
- un fabriquant du dispositif ;
- un modèle du dispositif ;
- un type d'écran du dispositif (LCD, LED...) ;
- une luminosité de l'écran ;
- un type de traitement d'image utilisé pour l'affichage de l'image, par exemple un type d'algorithme de gradation locale ;
- ancienneté du dispositif ;
- etc.

L'au moins une caractéristique peut aussi comprendre une valeur de luminosité d'un écran du d'affichage numérique sur lequel l'image est affichée au moment de l'affichage de l'image.

En effet, la consommation électrique induite par l'affichage de l'image peut également dépendre d'un réglage de luminosité de l'écran lors de l'affichage de l'image. Cette caractéristique permet donc de prédire la consommation induite par l'affichage de l'image en fonction du paramètre de luminosité utilisé.

Le moteur d'apprentissage automatique peut apprendre à effectuer des prédictions de consommation induites en fonction de la valeur de luminosité de l'écran seule, ou bien en complément d'autres caractéristiques telles que les caractéristiques de l'image ou du dispositif d'affichage.

En effet, la valeur de luminosité pourra avoir une influence différente selon les différents types de dispositifs d'affichage, et les caractéristiques des images à afficher. L'utilisation pour l'apprentissage d'une caractéristique relative à la luminosité de l'écran, en combinaison avec des caractéristiques relatives à l'image et/ou au dispositif d'affichage numérique permet donc au moteur d'apprentissage automatique supervisé d'apprendre les corrélations existantes entre ces différentes caractéristiques pour la prédiction de la consommation électrique induite.

Les caractéristiques peuvent aussi comprendre au moins une caractéristique de l'environnement du dispositif d'affichage numérique.

L'au moins une caractéristique de l'environnement du dispositif peut par exemple comprendre une position et/ou une orientation du dispositif d'affichage numérique. Par exemple, la consommation peut varier en fonction de l'orientation du dispositif (avec par exemple avec une luminosité plus élevée si le dispositif est orienté vers le sud) ou encore de la position du dispositif (par exemple, en fonction de la présence d'autres dispositifs voisins). Ceci permet par exemple de prédire la consommation induite par l'affichage des images en fonction de la disposition du dispositif.

L'au moins une caractéristique de l'environnement du dispositif peut également comprendre au moins une donnée météorologique telle que par exemple une valeur de température, d'humidité ou de luminosité ambiante lors de l'affichage de l'image.

En effet, en fonction des technologies mise en oeuvre par les dispositifs d'affichage, ces valeurs ambiantes peuvent impacter la quantité d'énergie électrique induite par l'affichage d'une image. Pour la constitution de la base d'entraînement, les valeurs de données météorologiques peuvent par exemple être obtenues par le biais de prédictions météorologiques, ou directement par le biais de capteurs des dispositifs d'affichage.

Ceci permet donc de prédire la consommation induite par l'affichage d'une image en fonction des conditions météorologiques attendues lors de l'affichage. Dans le cas de caractéristiques de l'environnement du dispositif, l'entraînement peut se faire sur la base des caractéristiques de l'environnement du dispositif seules, ou bien des caractéristiques de l'environnement du dispositif en lien avec les caractéristiques du dispositif lui-même et/ou des caractéristiques de l'image, afin d'apprendre les corrélations existant entre les données météorologiques, les caractéristiques de l'image et/ou du dispositif d'affichage, et la consommation d'électricité induite par l'affichage de l'image.

La figure 3 représente un système Sys3 pour l'affichage d'au moins une image par au moins un dispositif d'affichage numérique selon un ensemble de modes de réalisation de l'invention.

Le système Sys3 comprend :
- au moins un dispositif d'affichage numérique équipé d'un écran. Dans l'exemple de la figure 3 dispositifs Disp31 , Disp32 et Disp33, équipés respectivement de 3 écrans Ecr31 , Ecr32 et Ecr33 sont représentés ;
- au moins un dispositif de calcul. Dans l'exemple de la figure 3, un serveur Serv3 est représenté. L'au moins un dispositif de calcul comprend :
   ∘ une mémoire Mem3 stockant un moteur d'apprentissage automatique préalablement entraîné, par exemple par une méthode telle que représentée en figure 2 ;
   ∘ au moins une unité de calcul Calc3 ;
- une connexion Conn3 entre l'au moins un dispositif de calcul et l'au moins un dispositif d'affichage numérique.

La figure 3 est fournie à titre d'exemple non limitatif uniquement d'un système Sys3 pour l'affichage d'au moins une image par au moins un dispositif d'affichage numérique selon un ensemble de modes de réalisation de l'invention, et d'autres variations sont possibles. Par exemple :
- les dispositifs d'affichage représentés en figure 3 sont des dispositifs fixes, mais un système Sys3 peut également comprendre des dispositifs d'affichage mobiles tels que des smartphones ou tablettes ;
- dans la figure 3, l'au moins un dispositif de calcul est un serveur. Cependant, l'invention n'est pas limitée à cet exemple, et le système Sys3 peut comprendre un unique dispositif ou une pluralité de dispositifs de calcul. Les dispositifs de calcul peuvent être des serveurs, ou d'autres dispositifs de calcul tels que des ordinateurs personnels ;
- si la figure 3 montre une unité de calcul unique Calc3 et une mémoire unique Mem3, plusieurs unités de calcul et mémoires peuvent être réparties sur un ou plusieurs dispositifs de calcul.

L'au moins une unité de calcul Calc3 peut être configurée pour prédire la consommation électrique induite par l'affichage d'une image ou d'un contenu sur les dispositifs Disp31 , Disp32 ou Disp33, par exemple par l'exécution d'une méthode telle que représentée en figure 4.

L'au moins une unité de calcul Calc3 peut également être configurée pour déclencher l'affichage d'une image ou d'un contenu par un dispositif d'affichage numérique, par exemple en envoyant l'image (ou le contenu comprenant l'image) et une instruction d'affichage au dispositif d'affichage numérique.

Comme il sera décrit plus en détails ci-après, l'au moins une unité de calcul peut permettre de réduire la consommation électrique induite par l'affichage des images, par exemple de l'une des manières suivantes :
- en modifiant les images/le contenu pour réduire la consommation induite par l'affichage ;
- en sélectionnant le dispositif d'affichage parmi un ensemble de dispositifs candidats le plus adapté pour l'affichage d'une image/d'un contenu donné, ou à l'inverse en sélectionnant le contenu le plus adapté à un dispositif d'affichage parmi un ensemble de contenus donnés ;
- en définissant les paramètres de placement d'un dispositif d'affichage permettant de réduire de manière globale la consommation électrique induite par l'affichage d'images sur le dispositif.

Il est maintenant fait référence à la figure 4.

La figure 4 montre un procédé P4 de prédiction de la consommation électrique induite par l'affichage d'au moins une image par un dispositif d'affichage numérique selon un mode de réalisation. Le procédé P4 peut par exemple être mis en oeuvre par l'au moins une unité de calcul Calc3.

Le procédé P4 comprend une première étape d'obtention d'au moins une caractéristique appartenant à un groupe de caractéristiques comprenant :
- des caractéristiques du dispositif d'affichage numérique ;
- des caractéristiques de l'environnement du dispositif d'affichage numérique ;
- des caractéristiques de l'au moins une image à afficher ;

En substance, cette étape consiste à obtenir des caractéristiques correspondant aux caractéristiques attendues en entrée du moteur d'apprentissage automatique supervisé et correspondant à l'affichage prévu. Par exemple, l'obtention des caractéristiques peut comprendre :
- l'obtention de l'image à afficher ;
- l'extraction d'une ou plusieurs caractéristiques représentatives de l'image à afficher ;
- l'obtention d'une ou plusieurs caractéristiques du dispositif d'affichage (par exemple le modèle, fabricant, type d'écran, etc.) ;
- l'obtention d'au moins une caractéristique de l'environnement du dispositif : position, orientation, donnée météorologique mesurée par le dispositif d'affichage ou prédite, etc.

Le procédé P4 comprend ensuite une deuxième étape S42 d'exécution d'un moteur d'apprentissage automatique supervisé prenant en entrée ladite au moins une caractéristique, le moteur d'apprentissage automatique supervisé ayant été préalablement entraîné, par exemple par un procédé tel que représenté en figure 2.

Le procédé P4 permet ainsi de prédire, la consommation électrique induite par l'affichage de l'image par le dispositif d'affichage numérique.

Si une image fait partie d'un contenu plus large, par exemple une vidéo, la consommation électrique globale du contenu peut également être prédite, par exemple en effectuant la somme des prédictions des consommation électriques induites de chaque image du contenu. Ainsi, le procédé P4 permet de prédire, pour un contenu donné, une valeur globale de consommation électrique induite par l'affichage du contenu.

La consommation électrique induite peut également être convertie en d'autres valeurs induites dépendant de la consommation électrique. Par exemple, la consommation électrique induite peut être convertie en émission de gaz à effet de serre induite, en coût induit etc.

Ainsi, le procédé P4 permet d'associer à un contenu donné une consommation électrique induite, mais également une empreinte carbone ou un coût d'exploitation associés

La prédiction de la consommation d'électricité induite par l'affichage d'une image permet de réduire cette consommation électrique de plusieurs manières. Par exemple, un contenu peut être modifié afin que ces images induisent une consommation électrique plus faible, un contenu peut être diffusé sur un dispositif d'affichage numérique induisant une consommation électrique plus faible pour les images de ce contenu, un dispositif d'affichage numérique peut être implanté afin que la consommation électrique généralement induite par les images diffusées soit plus faible, etc.

Le procédé P4 permet donc in fine de réduire la consommation électrique induite par l'affichage d'un contenu, mais également l'empreinte carbone associée au contenu ou encore le coût d'exploitation liée à l'affichage du contenu.

Il est maintenant fait référence aux figures 5a, 5b, 6a et 6b.

Les figures 5a et 5b montrent respectivement:
- un graphe GraphMes5 représentant la consommation électrique induite par l'affichage d'un premier contenu sur un premier dispositif d'affichage numérique, telle que mesurée lors de l'affichage du premier contenu sur le premier dispositif d'affichage numérique ;
- un graphe Pred5 représentant la consommation électrique induite par l'affichage du premier contenu sur le premier dispositif d'affichage numérique, telle que prédite par un procédé dans un mode de réalisation de l'invention, par exemple le procédé P4.

Les figures 6a et 6b montrent respectivement:
- un graphe GraphMes6 représentant la consommation électrique induite par l'affichage d'un deuxième contenu sur un deuxième dispositif d'affichage numérique, telle que mesurée lors de l'affichage du deuxième contenu sur le deuxième dispositif d'affichage numérique ;
- un graphe Pred6 représentant la consommation électrique induite par l'affichage du deuxième contenu sur le deuxième dispositif d'affichage numérique, telle que prédite par un procédé dans un mode de réalisation de l'invention, par exemple le procédé P4.

Chacun des graphes GrphMes5, GrphPrd5, GraphMes6 et GrphPrd6 montre ::
- sur l'axe des abscisses, le numéro de trame de chaque image du premier ou du deuxième contenu. On note par exemple ici que le premier contenu comprend 253 images et le deuxième contenu en comprend 365 ;
- sur l'axe des ordonnées, la consommation électrique induite (prédite ou mesurée) par l'affichage.

Les courbes Mes5, Pred5, Mes6 et Pred6 représentent donc les mesures ou prédictions de la consommation électrique induite par l'affichage des images successives de chaque contenu.

On observe sur ces courbes que la consommation électrique induite par l'affichage des images est très différente selon les images. On note également que la prédiction s'avère assez proche des mesures.

Ces exemples démontrent la capacité de l'invention à prédire de manière fiable la consommation d'électricité induite par l'affichage d'images sur des dispositifs d'affichage numériques. Ces exemples montrent également que la consommation électrique induite par l'affichage des images peut être très différente selon les images. La capacité de prédire cette consommation électrique induite permet donc de la réduire de manière importante, par exemple selon l'un des modes de réalisation décrits aux figures 7 à 9.

Il est maintenant fait référence à la figure 7.

La figure 7 montre un exemple de procédé de prédiction de la consommation électrique induite par l'affichage d'images sur un dispositif d'affichage numérique d'un dispositif en fonction d'au moins une caractéristique du dispositif ou de son environnement selon un mode de réalisation.

Le procédé P7 comprend toutes les étapes du procédé P4.

Dans l'exemple de la figure 7, l'au moins une caractéristique comprend au moins une caractéristique du dispositif d'affichage numérique ou de l'environnement du dispositif.

Par exemple, l'au moins une caractéristique peut comprendre l'une au moins des caractéristiques suivantes :
- Caractéristiques du dispositif :
   ∘ Type d'écran ;
   ∘ Taille de l'écran ;
   ∘ Fabricant ;
   ∘ Etc.
- caractéristique de l'environnement du dispositif :
   ∘ position ;
   ∘ orientation ;
   ∘ luminosité ambiante moyenne ;
   ∘ température moyenne ;
   ∘ taux d'humidité moyen ;
   ∘ etc.

Le procédé P7 comprend également une étape S74 de modification de ladite au moins une caractéristique du dispositif d'affichage numérique pour réduire la prédiction de la consommation électrique induite par l'affichage de l'au moins une image.

Par exemple, la modification des caractéristiques peut se faire de manière itérative : un critère de fin des modifications peut être testé à une étape S73, puis :
- si le critère n'est pas vérifié, l'étape S74 de modification est exécutée, suivie d'une nouvelle étape S42 de prédiction ;
- si le critère est vérifié, la modification est terminée, et des étrapes subséquentes, comme par exemple une étape S75 de déploiement du dispositif, peuvent être exécutées.

Le critère de fin des modifications à l'étape S73 peut être de différents types. Par exemple, il peut s'agir d'un critère portant sur un nombre d'itérations limites, l'obtention d'un niveau donné de réduction de la consommation induite, un critère de convergence vérifié lorsque la consommation ne diminue plus au bout de plusieurs itérations, etc.

Dit autrement, le procédé P7 peut correspondre à une modification itérative d'au moins un paramètre d'un dispositif d'affichage numérique ou de son environnement pour réduire la consommation électrique induite par l'affichage d'images sur le dispositif.

Par exemple, le procédé P7 peut optimiser la position, l'orientation ou encore les paramètres du dispositif (par exemple le type d'écran ou de ventilateur) afin de minimiser la consommation électrique généralement induite par l'affichage d'images sur le dispositif.

Le procédé P7 permet donc d'obtenir des dispositifs d'affichage numérique plus économes.

L'optimisation peut se faire sur la base d'une image unique, ou bien sur la base d'un ensemble d'images. Par exemple, la prédiction à l'étape S42 peut s'effectuer sur un ensemble d'images d'une base de test, et la consommation induite moyenne peut être retenu.

Les modifications à l'étape S74 peuvent également se faire de différentes manières. Par exemple, un ensemble de modifications possibles (par exemple un ensemble de positions et d'orientations possibles autour d'une position et d'une orientation de référence, un ensemble de caractéristiques possibles du dispositif d'affichage, etc.) peut être testée de manière exhaustive pour retenir la meilleure. Le choix des modifications à tester peut également s'effectuer par le biais d'algorithmes d'optimisation, tels que par exemple des algorithmes génétiques ou de descente de gradient.

Comme indiqué ci-dessus, une fois que les modifications des caractéristiques sont terminées, une ou plusieurs étapes subséquentes peuvent être effectuées.

Par exemple, le procédé P7 peut se conclure par une étape S75 de déploiement du dispositif selon l'au moins une caractéristique modifiée. Par exemple, cette étape peut consister à installer physiquement le dispositif d'affichage numérique selon les position, orientation ou caractéristiques du dispositif telles que modifiées aux étapes précédentes.

Il est maintenant fait référence à la figure 8.

La figure 8 montre un exemple de procédé de modification d'au moins une caractéristique d'au moins une image pour réduire la consommation électrique induite par l'affichage de l'au moins une image, selon un ensemble de modes de réalisation de l'invention.

Le procédé P8 comprend toutes les étapes du procédé P4.

Dans le cadre du procédé P8, l'au moins une caractéristique comprend au moins une caractéristique de l'au moins image à afficher. Par exemple l'au moins une caractéristique peut comprendre l'image elle-même, ou des caractéristiques représentatives de l'image telles que la luminosité moyenne, le contraste, les valeurs de luminance pour chaque pixel, etc.

Le procédé P8 comprend également une étape S84 de modification de ladite au moins une caractéristique de l'image numérique pour réduire la prédiction de la consommation électrique induite par l'affichage de l'au moins une image.

Par exemple, la modification des caractéristiques peut se faire de manière itérative : un critère de fin des modifications peut être testé à une étape S83, puis :
- si le critère n'est pas vérifié, l'étape S84 de modification est exécutée, suivie d'une nouvelle étape S42 de prédiction ;
- si le critère est vérifié, la modification est terminée, et des étrapes subséquentes, comme par exemple une étape S85 d'affichage de l'au moins une image modifiée.

Le critère de fin des modifications à l'étape S83 peut être de différents types. Par exemple, il peut s'agir d'un critère portant sur un nombre d'itérations limites, l'obtention d'un n niveau donné de réduction de la consommation induite, un critère de convergence vérifié lorsque la consommation ne diminue plus au bout de plusieurs itérations, etc.

Dit autrement, le procédé P8 peut correspondre à une modification itérative d'au moins un paramètre d'une image (par exemple, de l'image elle-même ou d'un paramètre représentatif de l'image tel que la luminosité moyenne, le contraste de l'image, etc.).

Par exemple, le procédé P8 peut optimiser l'image, soit par le biais de modifications directe des valeurs d'intensité lumineuse, soit par le biais de modifications de paramètres globaux de l'image (luminosité, contraste...) afin de minimiser la consommation électrique généralement induite par l'affichage de l'au moins une image.

Le procédé P8 permet donc d'obtenir des images dont l'affichage induit une consommation électrique plus faible.

L'optimisation peut se faire sur base d'une image unique, ou bien sur la base d'un ensemble d'images. Par exemple, la prédiction à l'étape S42 et la modification à l'étape S74 peuvent s'effectuer sur toutes les images d'un contenu donné, par exemple une vidéo.

La prédiction à l'étape S42 peut également se faire, soit pour un dispositif particulier donné (par exemple le dispositif sur lequel l'au moins une image doit être affiché), ou pour une pluralité de dispositifs. Par exemple, une prédiction de la consommation électrique induite par l'affichage d'une image peut se faire pour chaque dispositif d'un ensemble de dispositifs d'affichage numériques de référence, et la moyenne des consommations induites pour les différents dispositifs peut être retenue. Ainsi, ceci permet d'estimer la consommation induite par l'affichage de l'image sur un ensemble de dispositifs d'affichage cibles possibles.

De même, la prédiction de consommation peut se faire soit pour une image unique, soit pour un ensemble d'images, par exemple toutes les images d'un contenu, par exemple d'une vidéo. Dans ce deuxième cas, la somme ou la moyenne des consommations peut être prise en compte, afin de diminuer la consommation induite par l'affichage d'un contenu.

Les modifications à l'étape S84 peuvent également se faire de différentes manières. Par exemple, la modification peut se faire de manière manuelle par un utilisateur auquel les consommations induites sont présentées à chaque itération. Ainsi, l'utilisateur peut tester différentes modifications afin de diminuer la consommation induite. Par exemple, une courbe de prédiction des consommations induites par les images d'un contenu telles que les courbes Pred5 ou Pred6 peuvent être présentées à l'utilisateur, qui peut alors sélectionner une ou plusieurs images à modifier (par exemple les plus consommatrices), puis effectuer les modifications et relancer la prédiction, et ainsi de suite pour réduire la consommation induite par l'affichage du contenu.

Les modifications peuvent également être effectuées de manière automatique. Par exemple, un ensemble de modifications possibles (par exemple un lissage d'une image, une diminution de la luminosité ou du contraste, etc.) peut être testé de manière exhaustive pour retenir la meilleure. Le choix des modifications à tester peut également s'effectuer par le biais d'algorithmes d'optimisation, tels que par exemple des algorithmes génétiques ou de descente de gradient.

Comme indiqué ci-dessus, une fois que les modifications des caractéristiques sont terminées, une ou plusieurs étapes subséquentes peuvent être effectuées.

Par exemple, le procédé P8 peut se conclure par une étape S85 d'affichage de l'au moins une image modifiée sur un dispositif d'affichage numérique. Par exemple, le contenu modifié peut être diffusé sur un ou plusieurs dispositifs d'affichage numériques. La consommation électrique induite par la diffusion du contenu sera ainsi réduite.

Le procédé P8 permet donc une modification manuelle ou automatique d'images permettant d'afficher du contenu tout en limitant la consommation électrique associée. De fait, les coûts et émissions de gaz à effets de serre induits par la diffusion du contenu s'en trouvent également réduits.

Il est maintenant fait référence à la figure 9.

La figure 9 montre un exemple d'un procédé P9 de sélection d'un contenu à afficher selon un mode de réalisation.

Le procédé P9 comprend toutes les étapes du procédé P4.

Dans l'exemple de la figure 9, la prédiction à l'étape S42 s'effectue pour une pluralité de contenus distincts. Par exemple, le procédé P9 peut comprendre une étape S93 de vérification qu'un autre contenu est à tester, et :
- si un autre contenu est à tester, un retour à l'étape S42 de prédiction de la consommation électrique induite ;
- sinon, une étape S94 de sélection du contenu est activée.

Les contenus peuvent comprendre soit une image unique, soit une pluralité d'images. Dans ce deuxième cas, la prédiction à l'étape S42 peut s'effectuer pour chaque image, et une consommation électrique induite globale peut être déterminée pour le contenu, par exemple comme la somme ou la moyenne des consommations induites par les différentes images du contenu.

Ainsi, à l'issue de toutes les itérations des étapes S42 et S93, chaque contenu est associé à une prédiction d'une consommation électrique induite par l'affichage du contenu.

Le procédé P9 comprend ensuite une étape S94 de sélection d'au moins un contenu à afficher parmi ladite pluralité de contenus, afin de minimiser la prédiction de la consommation électrique induite par l'affichage de l'au moins un contenu.

Dit autrement, l'étape S94 consiste à sélectionner un contenu parmi l'ensemble de contenus testés, qui permet de minimiser la consommation électrique induite par l'affichage. Par exemple, le contenu associé à la prédiction de consommation électrique induite la plus faible peut être sélectionné.

Le procédé P9 peut en outre également comprendre une étape ultérieure d'affichage de l'au moins un contenu sélectionné sur l'au moins un dispositif d'affichage numérique.

Ainsi, le procédé P9 permet de sélectionner, et le cas échéant d'afficher, un contenu parmi un ensemble de contenus donnés qui minimise la consommation électrique induite par l'affichage.

Le procédé P9 permet donc de réduire la consommation électrique induite par l'affichage de contenu sur des écrans numériques. Il permet donc également de réduire la consommation de gaz à effets de serre induite par l'affichage, et le coût de l'affichage.

Il est maintenant fait référence à la figure 10.

La figure 10 montre un exemple d'un procédé P10 de sélection d'un dispositif sur lequel afficher un contenu selon un mode de réalisation.

Le procédé P10 comprend toutes les étapes du procédé P4.

Dans l'exemple de la figure 10, la prédiction à l'étape S42 s'effectue pour une pluralité de dispositifs d'affichage distincts. Par exemple, le procédé P10 peut comprendre une étape S103 de vérification qu'un autre dispositif d'affichage est à tester, et :
- si un autre dispositif d'affichage est à tester, un retour à l'étape S42 de prédiction de la consommation électrique induite ;
- sinon, une étape S104 de sélection du dispositif d'affichage est activée.

Dit autrement, la consommation électrique induite par l'affichage d'un contenu est prédite pour l'affichage du contenu sur une pluralité de dispositifs d'affichage distincts.

Les contenus peuvent comprendre soit une image unique, soit une pluralité d'images. Dans ce deuxième cas, la prédiction à l'étape S42 peut s'effectuer pour chaque image, et une consommation électrique induite globale peut être déterminée pour le contenu, par exemple comme la somme ou la moyenne des consommations induites par les différentes images du contenu.

Ainsi, à l'issue de toutes les itérations des étapes S42 et S103, chaque dispositif d'affichage est associé à une prédiction d'une consommation électrique induite par l'affichage du contenu.

Le procédé P10 comprend ensuite une étape S104 de sélection d'au moins un dispositif d'affichage numérique sur lequel afficher l'image parmi ladite pluralité de dispositifs d'affichage numérique, afin de minimiser la prédiction de la consommation électrique induite par l'affichage de l'au moins une image.

Dit autrement, l'étape S104 consiste à sélectionner parmi l'ensemble de dispositifs d'affichage numériques testés, celui qui permet de minimiser la consommation électrique induite par l'affichage du contenu. Par exemple, le dispositif d'affichage numérique associé à la prédiction de consommation électrique induite la plus faible peut être sélectionné.

Le procédé P10 peut en outre également comprendre une étape ultérieure d'affichage de l'au moins une image sur ledit dispositif d'affichage numérique sélectionné.

Ainsi, le procédé P10 permet de sélectionner un dispositif d'affichage parmi un ensemble donné de dispositifs d'affichage qui minimise la consommation électrique induite par l'affichage du contenu, et le cas échéant d'afficher le contenu sur le dispositif sélectionné.

Le procédé P10 permet donc de réduire la consommation électrique induite par l'affichage d'un contenu sur des écrans numériques. Il permet donc également de réduire la consommation de gaz à effets de serre induite par l'affichage, et le coût de l'affichage.

La présente divulgation ne se limite pas aux exemples de procédé, système, et moteur d'apprentissage automatique supervisé décrits ci-avant, seulement à titre d'exemple, mais elle englobe toutes les variantes que pourra envisager l'homme de l'art dans le cadre de la protection recherchée.

## Revendications

1. Procédé (P2) d'entraînement d'un moteur d'apprentissage automatique supervisé pour la prédiction de la consommation électrique induite par l'affichage d'au moins une image par un dispositif d'affichage numérique, ledit procédé comprenant :
- l'obtention (S21) d'une base d'entraînement à partir d'une pluralité d'images d'entraînement, chaque échantillon de ladite base d'entraînement comprenant :
∘ au moins une caractéristique appartenant à un groupe de caractéristiques comprenant :
▪ des caractéristiques d'un dispositif d'affichage numérique ;
▪ des caractéristiques de l'environnement du dispositif d'affichage numérique ;
▪ des caractéristiques d'une image d'entraînement ;
∘ une unique valeur de consommation induite par l'affichage de ladite image d'entraînement, ladite unique valeur de consommation électrique induite étant obtenue grâce à une mesure effectuée lors de l'affichage de l'image d'entraînement ;
- l'entraînement (S22) dudit moteur d'apprentissage automatique supervisé sur ladite base d'entrainement pour minimiser une fonction de perte entre les prédictions de consommation électriques induites effectuées par le moteur d'apprentissage automatique supervisé et les valeurs de consommations induites obtenues grâce aux mesures effectuées lors de l'affichage des images.

2. Procédé selon la revendication 1 dans lequel l'au moins une caractéristique comprend l'image d'entraînement.

3. Procédé selon la revendication 2, dans lequel l'au moins une caractéristique comprend en outre au moins une caractéristique du dispositif d'affichage numérique sur lequel l'image est affichée.

4. Procédé selon l'une quelconque des revendications précédentes, dans lequel l'au moins une caractéristique comprend une valeur de luminosité d'un écran du d'affichage numérique sur lequel l'image est affichée au moment de l'affichage de l'image.

5. Procédé selon l'une quelconque des revendications précédentes, dans lequel l'au moins une caractéristique comprend au moins une caractéristique de l'environnement du dispositif d'affichage numérique.

6. Procédé selon la revendication précédente, dans lequel l'au moins une caractéristique de l'environnement du dispositif d'affichage numérique comprend au moins une donnée météorologique.

7. Procédé (P4 ; P7 ; P8 ; P9) de prédiction de la consommation électrique induite par l'affichage d'au moins une image par un dispositif d'affichage numérique, ledit procédé comprenant :
- l'obtention (S41) d'au moins une caractéristique appartenant à un groupe de caractéristiques comprenant :
∘ des caractéristiques du dispositif d'affichage numérique ;
∘ des caractéristiques de l'environnement du dispositif d'affichage numérique ;
∘ des caractéristiques de l'au moins une image à afficher ;
- l'exécution (S42) d'un moteur d'apprentissage automatique supervisé prenant en entrée ladite au moins une caractéristique, ledit moteur d'apprentissage automatique supervisé ayant été préalablement entraîné par un procédé selon l'une des revendications 1 à 6.

8. Procédé (P7) selon la revendication 7, dans lequel :
- l'au moins une caractéristique comprend au moins une caractéristique du dispositif d'affichage numérique ou de l'environnement du dispositif,
- le procédé comprend une modification (S74) de ladite au moins une caractéristique du dispositif d'affichage numérique ou de l'environnement du dispositif pour réduire la prédiction de la consommation électrique induite par l'affichage de l'au moins une image.

9. Procédé selon la revendication précédente, comprenant en outre le déploiement (S75) du dispositif selon ladite au moins une caractéristique modifiée.

10. Procédé (P8) selon la revendication 7, dans lequel :
- l'au moins une caractéristique comprend au moins une caractéristique de l'au moins image à afficher ;
- procédé comprend en outre la modification (S84) de ladite au moins une caractéristique de l'au moins image à afficher pour réduire la prédiction de la consommation électrique induite par l'affichage de l'au moins une image.

11. Procédé selon la revendication précédente, comprenant en outre l'affichage (S85) de l'au moins une image modifiée sur un dispositif d'affichage numérique.

12. Procédé (P9) selon la revendication 7, dans lequel le procédé comprend :
- la prédiction de la consommation électrique induite par l'affichage d'une pluralité de contenus comprenant au moins une image par au moins un dispositif d'affichage numérique ;
- la sélection (S94) d'au moins un contenu à afficher parmi ladite pluralité de contenus, afin de minimiser la prédiction de la consommation électrique induite par l'affichage de l'au moins un contenu.

13. Procédé selon la revendication 7, dans lequel le procédé comprend :
- la prédiction de la consommation électrique induite par l'affichage d'au moins une image par une pluralité de dispositifs d'affichage numérique ;
- la sélection (S104) d'au moins un dispositif d'affichage numérique sur lequel afficher l'image parmi ladite pluralité de dispositifs d'affichage numérique, afin de minimiser la prédiction de la consommation électrique induite par l'affichage de l'au moins une image.

14. Système (Sys1) pour l'entraînement d'un moteur d'apprentissage automatique supervisé pour la prédiction de la consommation électrique induite par l'affichage d'au moins une image par un dispositif d'affichage numérique, ledit système comprenant :
- au moins un dispositif d'affichage numérique (Disp11, Disp12, Disp13) apte à mesurer une consommation électrique induite par l'affichage d'au moins une image ;
- au moins une unité de calcul (Calc1) configurée pour exécuter un procédé selon l'une des revendications 1 à 6.

15. Système pour l'affichage d'au moins une image, ledit système comprenant :
- au moins un dispositif d'affichage numérique ;
- au moins une unité de calcul configurée pour exécuter un procédé selon l'une des revendications 7 à 13.

16. Dispositif d'affichage numérique déployé selon la revendication 9.

17. Programme informatique comportant des instructions pour la mise en oeuvre du procédé selon l'une des revendications 1 à 13 lorsque ce programme est exécuté par un processeur.

18. Support d'enregistrement non transitoire lisible par un ordinateur sur lequel est enregistré un programme pour la mise en oeuvre du procédé selon l'une des revendications 1 à 13 lorsque ce programme est exécuté par un processeur.
